(19) **Europäisches Patentamt**
**European Patent Office**
**Office européen des brevets**

(11) **EP 4 703 891 A1**

(12) **EUROPEAN PATENT APPLICATION**

(43) Date of publication:
04.03.2026 Bulletin 2026/10

(21) Application number: 24196982.3

(22) Date of filing: 28.08.2024

(51) International Patent Classification (IPC):
*G06F 11/30* (2006.01)     *G06F 11/34* (2006.01)
*H04L 41/16* (2022.01)     *G06F 11/07* (2006.01)

(52) Cooperative Patent Classification (CPC):
**G06F 11/3438; G06F 11/3051; H04L 41/0823;**
**H04L 41/0853; H04L 41/16; H04L 41/5067;**
G06F 11/0793; G06F 11/3409

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **baramundi software GmbH**
**86159 Augsburg (DE)**

(72) Inventors:
• **LIPPERT, Lars**
**82064 Straßlach-Dingharting (DE)**

• **SPANGENBERG, Philipp**
**86154 Augsburg (DE)**
• **HEIDER, Frank**
**86502 Laugna (DE)**

(74) Representative: **2SPL Patentanwälte PartG mbB**
**Landaubogen 3**
**81373 München (DE)**

Remarks:
Amended claims in accordance with Rule 137(2) EPC.

(54) **METHOD AND APPARATUS TO MANAGE A COMPUTING NODE, METHOD TO MONITOR A COMPUTING NODE AND ASSOCIATED COMPUTER PROGRAM**

(57) Provided is a method (100) to manage a computing node, comprising receiving (110), for the computing node, information on a user experience and receiving (120), for the computing node, information on the configuration of the computing node. The method further comprises correlating (140) the information on the user experience and the information on the configuration to determine an unexpected behavior of the computing node. If an unexpected behavior is determined, an output signal (150) causing an action to mitigate the unexpected behavior is generated.

FIG. 1

## Description

## Field

The present disclosure relates to a method and an apparatus to manage a computing node, a method to monitor a computing node and associated computer program to maintain good performance of the computing node for good user productivity and satisfaction.

## Background

In many organizations using computer networks having multiple computing nodes or endpoints, changes to the endpoints, such as software updates, configuration changes, adding and removing patches, can have a significant impact on employee productivity and satisfaction as it has an impact on aspects like system performance and stability, security or power consumption. However, predicting the correlation between these changes and their impact can be complex due to the diversity of systems, the variability of user experiences, and the dynamic nature of a digital environment so that degradations of performance of the computing node may happen, causing a user of the computing node to become less efficient.

Degradations of performance and user experience, however, often go unnoticed since users often do not actively report issues with their computing nodes and rather accept a degradation in their effectivity. Hence, an employer does not even principally have the chance to change a configuration of a computing node to re- establish performance.

Therefore, there is a demand for an enhanced method to manage a computing node.

## Summary

An example relates to a method to manage a computing node. The method comprises receiving, for the computing node, information on a user experience and information on the configuration of the computing node. The method further comprises correlating the information on the user experience and the information on the configuration to determine an unexpected behavior of the computing node. If an unexpected behavior is determined, the method generates an output signal causing an action to mitigate the unexpected behavior. Information on the configuration of a computing node may, for example, include installed software, the version of the installed software, patches installed, user policies, hardware used within the computing node, etc. A computing node may be defined as an independent unit, e.g. within a network or cluster, tasked with performing computations, processing data, or providing services to a user. Independent may be understood such that it is possible to run a node with different configurations, e.g. using different operating systems, software e.g. and such that a computing node may also be operated in isolation. Computing nodes can range from simple devices like sensors to powerful servers or specialized hardware designed for high-performance computing. For instance, servers in a data center may act as a computing node being a high-performance machine handling extensive computations and data processing tasks. A virtual machine (VM) may also be understood to be a computing node, since it can be set up in different configurations. In edge computing, nodes can be devices located closer to the data source, such as IoT devices, smartphones, or local servers.

By not only using information on a user experience but also information on the configuration of a computing node to determine, whether the computing node exercises unexpected behavior, one may more reliably determine, whether the computing node performs worse than expected. For example, if a new software version includes additional features and, therefore, uses more CPU or GPU power, an increasing energy consumption of the computing node could be a consequence. Without the possibility to realize that there is a newer version of the software installed as compared to another node, one does principally not have the capability to conclude that an increased energy consumption corresponds to the expected behavior of the computing node. Although it may consume more energy than a similar computing node not running the software or running the software with another version, the correlation of the embodiments described herein can now conclude that, given the individual configuration, an increased energy consumption is the expected behavior of the computing node observed. In such circumstances, one may otherwise erroneously conclude on unexpected behavior and start trying to change the configuration or even the computing node without a reason.

According to some implementations, correlating the information comprises using a neural network/Artificial Intelligence (AI). Incorporating information on the configuration of the computer, such as hardware specifications and installed software versions, can significantly enhance the AI system's ability to assess whether the computer is exhibiting unexpected behavior. This additional context for the AI system provides additional benefits. Such enhanced Contextual Understanding may enable to be sensitive on hardware compatibility, as certain hardware configurations may have issues with specific software versions or drivers. By knowing, e.g. the hardware setup, the AI can more accurately identify if an issue is related to compatibility problems. Additionally, different hardware configurations, such as variations in CPU models, RAM sizes, or GPU presence, have unique performance baselines. The AI can adjust its expectations based on the specific hardware, leading to more precise assessments. With knowledge of the system's configuration, the AI can establish more precise baselines for expected behavior. For instance, a high-end gaming PC will have different performance expectations compared to a low-end office workstation. Furthermore, the AI can detect anomalies that are specific to certain configurations, such as issues that only occur on a particular GPU model or with a specific version of an application. When unexpected behavior is detected, AI may optionally also provide recommendations for troubleshooting. For example, it might suggest updating a specific driver version known to cause issues with the detected hardware. Additionally, the AI can correlate configuration data with performance issues, offering insights such as that a certain issue commonly occurs on systems with a specific configuration and running on version X of the software.

According to some examples, the neural network comprises an autoencoder network. Autoencoders are well-suited for anomaly detection. By training the network on normal operating data, the autoencoder network learns to reconstruct this data. When the system encounters abnormal or unexpected behavior, the reconstruction error (the difference between the input data and its reconstruction) increases, indicating a potential anomaly or unexpected behavior. This makes autoencoders highly effective for identifying deviations from normal behavior. Autoencoders automatically learn relevant features from the data without requiring manual feature engineering. This capability is beneficial when dealing with complex and diverse telemetry and configuration data, as the autoencoder can identify underlying patterns and relationships that may not be immediately apparent. Autoencoders can also denoise the input data by learning to reconstruct only the important aspects of the data while ignoring noise. This is particularly useful in telemetry data, which may contain irregularities or transient spikes that do not represent genuine performance issues. Autoencoders can also be easily scaled to handle large volumes of data from multiple sources. They can further be fine-tuned to different configurations and telemetry data characteristics, making them adaptable to various hardware setups and usage patterns.

According to some embodiments, the information on a user experience comprises user feedback given by a user of the computing node.

Incorporating user feedback into the system, in addition to telemetry data, may provide advantages in assessing and ensuring an improved user experience on a computing node. User feedback may offer qualitative insights that telemetry data alone might not capture, such as subjective perceptions of system performance or specific usability issues. This approach allows the AI to have a more comprehensive understanding of the user experience.

By analyzing both telemetry data and user feedback, the AI can further correlate objective performance metrics with subjective user experiences. For example, if telemetry data indicates high CPU usage but the user reports no noticeable slowdown, the system can infer that the workload is being managed efficiently. Conversely, if a user reports sluggish performance despite normal telemetry readings, the AI might identify less obvious issues, such as software conflicts or specific application inefficiencies.

User feedback also helps in validating and refining the AI's models. When users report their experiences, the AI can compare these reports with its predictions and adjust its algorithms to improve accuracy. Over time, this continuous feedback loop enhances the system's ability to detect and predict issues more precisely, leading to more reliable performance assessments.

Moreover, user feedback can provide context-specific information that telemetry data might miss. For instance, a user might report that a particular application does not render properly after a recent update. Such rendering problems may not be captured by telemetry monitoring tools. User feedback on such information can guide the AI to focus on specific software versions or configurations, making the diagnostics more targeted and effective.

According to some embodiments, a recommendation for a change of the configuration of the computing node is included into the output signal. The advantages of implementing configuration changes are numerous. Improved performance is one significant benefit, as optimizing resources based on real-time data and user feedback ensures that resources are used more efficiently, leading to better overall performance and responsiveness. Optional automated adjustments to network settings or power management can help reduce latency and improve system speed. Enhanced stability and reliability are also achieved through proactive issue resolution, where recommended updates and patches prevent known issues eventually before they affect the user. Ensuring that all systems adhere to best practices and recommended configurations may also reduce the likelihood of errors and inconsistencies that could lead to crashes or slowdowns.

User satisfaction is another advantage. By considering user feedback, the system can make changes that directly address user concerns, leading to a more personalized and satisfactory experience. Automated and timely application of recommendations can minimize downtime, ensuring that users experience fewer disruptions. Automated and centralized management of configuration changes may ensure that even large-scale deployments can be managed efficiently without significant overhead.

Following the previous considerations, according to some embodiments, a software configuration of the computing node is automatically changed based on the recommendation. One advantage of doing so is improved performance. By optimizing software settings and updating applications, resources are used more efficiently, leading to faster response times, reduced latency, and better overall system performance. The embodiments described herein may tailor configurations to the specific needs and usage patterns of the computing node, ensuring smooth and effective operation. Enhanced stability is another significant benefit.

Proactive issue resolution may be facilitated by the methods ability to identify potential problems before they affect the user. This preemptive approach may help maintain system health and performance, preventing issues from escalating into significant disruptions. As a result, downtime is minimized, ensuring that the system remains operational and productive. Users may experience fewer interruptions, which is particularly important in environments where continuous availability is critical. Operational efficiency is greatly enhanced by automating the update and configuration process, reducing the need for manual intervention by IT staff. Centralized management tools can deploy changes across multiple nodes simultaneously, further enhancing efficiency.

The system's ability to continuously learn from the effects of implemented changes ensures adaptive learning and continuous improvement. Over time, the system refines its recommendations, evolving with changing usage patterns and technological advancements to maintain optimal performance and relevance.

Security is also improved by keeping software and drivers up to date, protecting the system from vulnerabilities and security threats. Regular updates often include security patches that mitigate risks and safeguard sensitive data and system integrity.

Finally, the detailed diagnostics and insights provided by the system allow for more targeted and effective troubleshooting. By correlating telemetry data with user feedback, the identifies root causes and optimal solutions for performance issues, leading to more precise and actionable recommendations.

According to some embodiments, an alternative configuration for the computing node is determined, the alternative configuration corresponding to another computing node exhibiting an expected behavior. The alternative configuration is then used as the recommendation, assuring a high likelihood that the recommendation does not cause further problems. According to some embodiments, the computing nodes are represented as paths within a graph, a path comprising edges and vertices. The vertices represent an attribute of the configuration. The graph corresponding to the alternative configuration has a minimum number of differences to the graph representing the computing node. The recommendation for fixing the issue involves finding an optimal path that consists only of edges and vertices of non-outliers exhibiting expected behavior. The optimal path should have the minimum number of differences from the outlier path. By adopting this approach, the method further ensures that the recommended alternative configuration is as close as possible to the original configuration of the outlier node exhibiting the unexpected behavior, minimizing disruption while addressing the root cause of the issue. This method leverages the graph structure to systematically identify the most similar non-outlier path, providing a clear and effective solution for resolving performance anomalies or other issues in the computing node.

Some embodiments comprise identifying an attribute within the information on the configuration having a maximum probability of causing unexpected behavior and exchanging the attribute by an alternative attribute, the alternative attribute being associated to the maximum number of computing nodes exhibiting expected behavior. This embodiment systematically addresses the root cause of unexpected behavior by focusing on the most problematic attribute. By identifying the attribute most likely to cause issues and replacing it with an attribute that is known to function well in a majority of cases, the likelihood of resolving the issue effectively and efficiently is significantly increased.

This method leverages statistical analysis to make data-driven decisions, ensuring that the changes made are based on observed patterns of success and failure across numerous computing nodes. Consequently, this reduces the risk of making ineffective or unnecessary changes and helps maintain system stability and performance. Moreover, this targeted approach minimizes the extent of changes needed, preserving the overall configuration of the computing node as much as possible while addressing the critical issue.

An embodiment of a method to monitor a computing node comprises extracting, from the computing node, information on a user experience and information on the configuration of the computing node. The method further comprises correlating the information on the user experience and the information on the configuration to determine an unexpected behavior of the computing node. If an unexpected behavior is determined, an output signal is generated, the output signal comprising the information that an unexpected behavior is determined as well as the information on the configuration of the computing node. In other words, correlation or outlier detection is performed directly on the node. This may identify issues as soon as they occur. This immediate detection allows for quicker responses to problems, minimizing the impact on the user experience. Real-time monitoring ensures that anomalies are caught early, preventing minor issues from escalating into major problems.

Local processing of data on the node may further reduce the latency associated with transmitting large volumes of telemetry data to a remote server for analysis. This may be important in environments where quick detection and response are critical, as it ensures that any unexpected behavior is identified and addressed promptly.

By analyzing the data locally and only transmitting relevant information when an outlier exhibiting unexpected behavior is detected, the amount of data sent over the network is reduced. This conserves bandwidth, making the system more efficient and less taxing on network resources. It also reduces costs associated with data transmission, especially in scenarios with limited or expensive network connectivity.

Processing data locally on the node further enhances privacy and security. Sensitive user data and detailed telemetry information remain on the device, reducing the risk of exposure during transmission. Only the necessary information related to the detected outlier exhibiting unexpected behavior and its configuration is sent to the server, minimizing the amount of sensitive data that needs to be handled centrally.

By distributing the processing load across individual nodes, the system becomes more scalable. Each node handles its own data analysis, reducing the burden on central servers. This decentralized approach allows the system to efficiently manage many nodes without requiring significant increases in central processing power and storage. Local detection may also allow for customization and adaptability to the specific context of each node. Each node can be tailored to its unique environment and usage patterns, improving the accuracy of outlier detection. This individualized approach ensures that the detection algorithms are more sensitive to the specific anomalies relevant to each node.

With local processing, an entire system remains resilient even if the central server experiences downtime or connectivity issues. Nodes continue to monitor and detect anomalies independently, ensuring continuous operation and detection capabilities. This fault-tolerant design enhances the reliability of the monitoring system.

Performing analysis on the node also allows the system to leverage localized contextual information that may not be available to a remote server. This context includes the specific operational environment, user behavior, and real-time interactions with the node. Such contextual awareness can improve the accuracy and relevance of outlier detection.

## Brief description of the Figures

Some examples of apparatuses and/or methods will be described in the following by way of example only, and with reference to the accompanying figures, in which

Fig. 1 is a flowchart of an embodiment of a method to manage a computing node;

Fig. 2 principally illustrates an infrastructure in which the method illustrated in fig. 1 is used;

Fig. 3 is an illustration of an implementation to determine a recommendation for a change of a configuration of the computing node;

Fig. 4 is a flowchart of an embodiment of a method to monitor a computing node;

Fig. 5 is a conceptual view of the embodiments described herein; and

Fig. 6 is a schematic illustration of an n apparatus to manage a computing node.

## Detailed Description

Some examples are now described in more detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

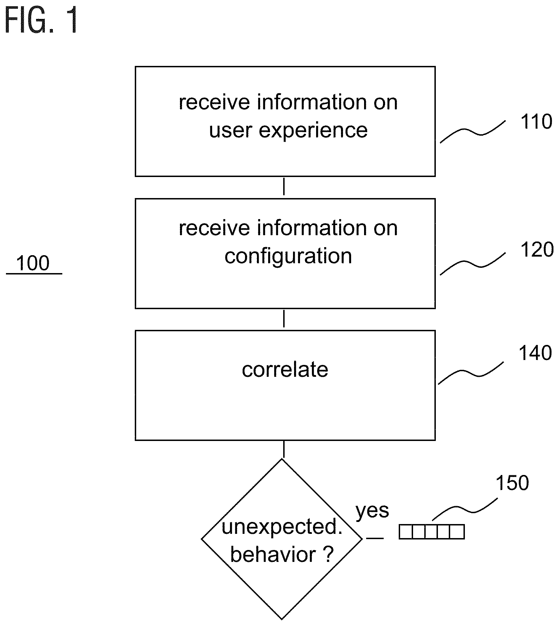

Fig. 1 is a flowchart of an embodiment of a method 100 to manage a computing node.

The method comprises receiving 110, for the computing node, information on a user experience. The method further comprises receiving 120 information on the configuration of the computing node. The information on the user experience and the information on the configuration is correlated 140 to determine an unexpected behavior of the computing node. If an unexpected behavior is determined, an output signal 150 causing an action to mitigate the unexpected behavior is generated. The output signal may be of any suitable type. According to one embodiment, the output signal may just alert a user of the method or an IT administrator that a node has been determined to exhibit unexpected behavior to cause the IT administrator to take action. According to another implementation, the output signal may cause an automated action by an endpoint management system to, for example, change a software configuration. The output signal maybe processed locally, or it may alternatively be transmitted to a further processing entity, e.g. via a network.

Information on the user experience for a computing node can be gathered from various sources. Direct input from users through feedback forms, surveys, and ratings provides subjective insights into their experience. Usage analytics, which collects data from user interactions with applications and the operating system, such as clickstream data, session durations, and task completion times, offers insights into user behavior.

Application Performance Monitoring (APM) tools track metrics like response times, error rates, and transaction throughput to understand application performance from the user's perspective. System performance metrics, including CPU usage, memory usage, disk I/O, and network latency, indicate how well the system is functioning and impacting the user experience. Error and crash reports, which log system crashes, application errors, and other unexpected events, provide clues about issues affecting users.

User behavior tracking tools monitor mouse movements, clicks, and navigation patterns to identify usability issues and areas where users may experience difficulties. Help desk and support ticket records highlight common user complaints and recurring issues that negatively impact the user experience. Real User Monitoring (RUM) tools collect data from actual users in real-time, capturing metrics related to page load times, resource load times, and other user-centric performance indicators.

Synthetic monitoring simulates user interactions with applications and systems to test and measure performance from a user perspective, identifying potential issues before they affect real users. Additionally, user session recordings provide detailed insights into how users interact with the system and where they encounter problems. By combining data from these various sources, the system can obtain a comprehensive view of the user experience, enabling more accurate correlation with system configuration and better detection of unexpected behaviors.

Information on the configuration of the computing node can be received from various sources. One primary source is the telemetry data collected directly from the computing node's operating system and hardware sensors. This telemetry data includes detailed information about CPU specifications, memory size, disk capacity, and network interfaces.

Another important source is system logs, which provide comprehensive details about the system's hardware and software configurations. These logs include information about installed drivers, operating system versions, and application installations. Configuration management tools also play a crucial role, offering a centralized way to manage and monitor system configurations, including details about installed applications, software versions, and system settings.

Monitoring agents are specialized software installed on the computing node that continuously collect configuration and performance data. These agents send the data to a central monitoring system, providing real-time insights into the node's configuration. Network monitoring tools, while primarily focused on network performance, also gather data about network configurations, which can include information about IP addresses, connected devices, and network traffic patterns.

Cloud management platforms are essential for cloud-based computing nodes, providing detailed information about system configurations, resource allocations, and usage patterns. Application Performance Monitoring (APM) tools monitor the performance of applications running on the computing node and offer insights into application-specific configurations, such as version numbers and dependencies.

In other words, the embodiments described herein proposes a method and an associated system that uses artificial intelligence to analyze experience data, i.e. information on a user experience, from various digital employee experience (DEX) systems (and other sources) and correlate this data with endpoint changes being information on the configuration of the computing node. Some embodiments may aggregate data from different companies and infrastructures to learn on the expected and unexpected behavior of computing nodes from a big dataset. The system many generate suggestions, recommendations for the administrator/user and might optionally even automatically enforce changes for an endpoint that could potentially maximize employee productivity and satisfaction. By doing so, it effectively manages and optimizes the digital experience in a way that enhances employee productivity and satisfaction.

Conventionally, optimization of employee productivity and satisfaction was often addressed by various isolated systems.

Monitoring Systems conventionally used may analyze various endpoint parameters. These systems collected data on system performance, application behavior, user activities, and other relevant metrics. These systems often provide only raw data that requires manual analysis to derive meaningful insights. It may not be possible to effectively correlate endpoint changes with employee productivity and satisfaction.

Unified Endpoint Management (UEM) Systems are used to manage and secure endpoints in a connected, cohesive manner. They allow IT teams to change the configuration of the endpoints, deploy patches, and manage software. While UEM systems provide control over endpoint configurations, they do not inherently provide insights into how these changes impacted employee productivity and satisfaction.

Employee Surveys and Feedback can be used to understand employee satisfaction and productivity. These methods could be time-consuming and might not always provide real-time insights. Additionally, feedback given by humans manually may be a subjective impression that judge a behavior differently and an automated system can generate a more objective evaluation. One way to do so is Digital Employee Experience (DEX) Tools that focus on improving the digital environment for employees. They measure and analyze how employees interact with the digital tools and services they use in their work. This can include things like software usability, system performance, access to resources, and more. The goal of DEX tools is to improve productivity and employee satisfaction by optimizing the digital work environment.

Another related aspect is cyber solutions focusing on the identification of security threats or other anomalies. While the goal of these solutions is to protect the customers infrastructures, it does not directly aim to increase end user experience, while some information gathered from these tools may be relevant for this aspect.

According to the embodiments described herein, however, data provided from various of the previously isolated tools are correlated to analyze experience data and endpoint changes in real-time or close to real time. This may provide more accurate and timely insights into how to maximize employee productivity and satisfaction.

In the context of the embodiments of the method and the apparatus described herein, changes made to the endpoints and the performance of the endpoints are tracked. Said tracking, may, for example be performed by a software module. Moreover, they provide data about the employees' experiences with their digital work environment. Our system sources data from, for example, a subset or all the data sources mentioned previously (UEM tools). Said sources provide data about the endpoint configurations, software, patch levels, and hardware. Additionally, 3rd party solutions like the previously mentioned cyber security solutions can be sourced. The embodiments described herein then correlate this data to determine unexpected behavior and optionally use AI to generate suggestions for improving productivity and satisfaction. Combining elements of UEM, monitoring, 3rd party and DEX tools to address the problem can provide significant benefits.

In other words, the embodiments described herein implement a novel approach to enhancing the digital employee experience. They intelligently correlate and analyze two key data sets: digital employee experience data from various endpoints, and data related to changes made to these endpoints.

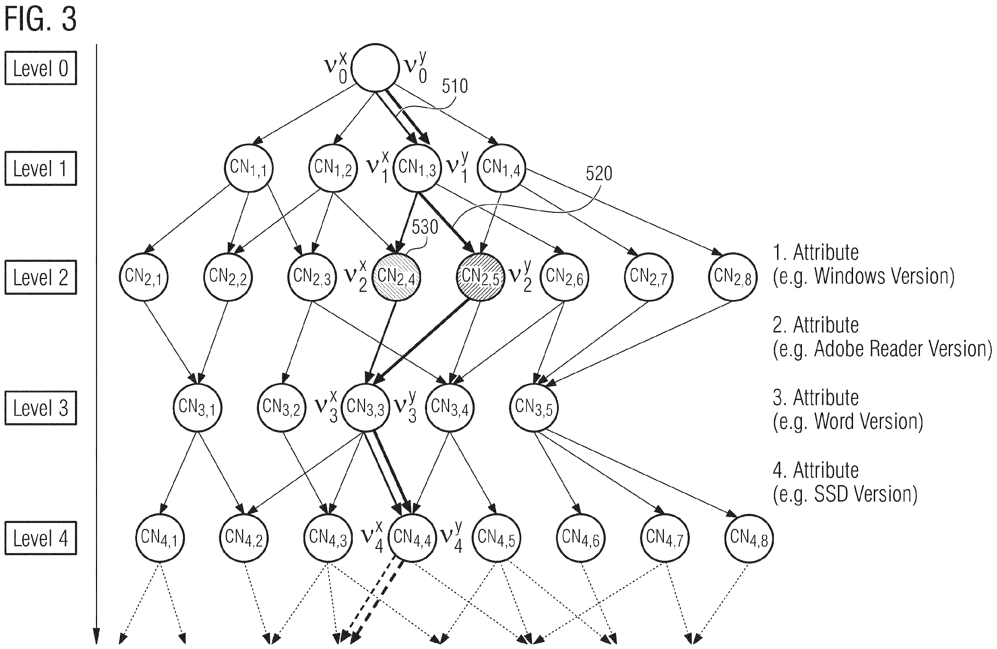

The system may then use artificial intelligence to generate actionable suggestions for endpoint changes that could maximize employee productivity and satisfaction. This approach not only provides a comprehensive view of the digital workspace but also offers intelligent insights to improve it. According to further embodiments illustrated by means of fig. 3, recommendations or suggestions may also be generated using an algorithm not based on AI.

The embodiments described herein so provide a holistic, data-driven, and AI-powered solution to optimize the digital employee experience. This is achieved by correlating endpoint data with employee experience data and using AI to learn and suggest improvements. This could potentially lead to increased productivity, improved employee satisfaction, and enhanced overall business performance.

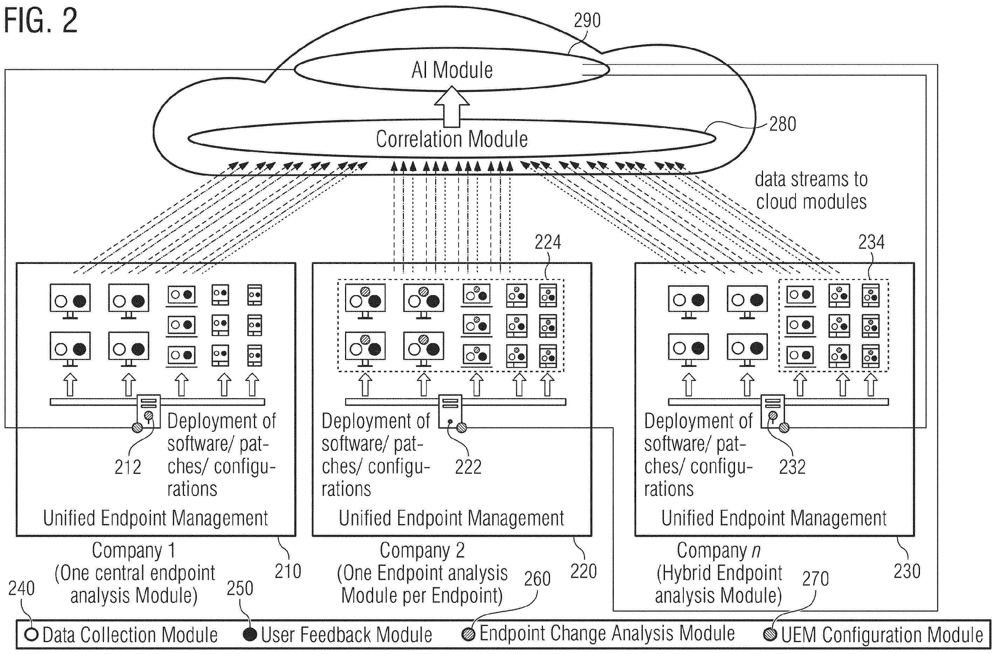

The different steps of the method illustrated in fig. 1 may be performed at different locations or on different computing nodes that collaborate to perform the method. To emphasize this aspect, the entities performing different parts of the method are in the following also called modules that can be implemented in various locations. The following paragraphs shortly summarize the functionality of the modules again while fig. 2 illustrates 3 different architectures where these modules can be deployed to cooperate in the desired way.

The illustration assumes that the method is implemented as a cloud-based platform that integrates with various endpoints in multiple organization's digital workspaces. These endpoints could include desktop computers, laptops, mobile devices, and other digital tools used by employees.

A Data Collection Module 240 can be implemented as a set of lightweight multi-platform agents installed on each endpoint. These agents collect various types of data constituting information on a user experience, such as system performance metrics, application usage data, error logs, and more. The collected data may be securely transmitted to a cloud platform for analysis.

A User Feedback Module 250 may be implemented as a user interface (UI) tool that allows employees to provide direct feedback about their digital experience. This can be done in the form of a simple survey or a more interactive tool that prompts for feedback at relevant times. The feedback includes ratings, comments, or any other form of user input. This data is incorporated into the system's analysis to provide a more comprehensive view of the employee experience.

An Endpoint Change Analysis Module 260 tracks changes made to the endpoints to provide information on the configuration of the computing node, such as patching, configuration changes, and software rollouts. It does this by integrating either with the organization's central Unified Endpoint Management system(s) (UEM) or as an agent on the individual endpoint.

A Correlation Module 280 correlates the employee experience data and user feedback with the endpoint change data as well as the telemetry data. It may use statistical methods and machine learning algorithms to identify patterns and relationships between the four data sets. In order to detect endpoints that deviate significantly from the norm or expected behavior (i.e. that exhibit unexpected behavior) one may use AI-based outlier detection. Artificial intelligence (AI) also helps to

identify those parameters that are relevant to identify outliers. Based on the characteristics of different datasets, outlier detection may be adapted, and an optimal selection may be made. The Correlation Module 280 also performs the outlier detection, using, for example, isolation forrest or an auto encoder network.

An optional AI module uses AI algorithms to learn from the continuous steam of changes and their impact to the endpoints in general and outliers specifically and generate suggestions for endpoint changes based on the correlated data. Machine Learning methods are used to identify the root causes or to narrows down the potential root causes that generate issues and help to prioritize changes to the configurations (performed by the UEM) to optimize the employee productivity and satisfaction. Fig. 3 will subsequently present an alternative approach to derive a recommendation. Once a recommendation is derived, the suggestions are presented to IT administrators in an easy-to-understand format, such as a dashboard or report. As an option of the implementation, the results, recommendations or actions might be fed directly into a Unified endpoint management system.

In this event, UEM Configuration Module 270 is provided the optimized parameters (patches, software, configurations) for each endpoint. These parameters are then processed in the UEM and deployed to each endpoint. The UEM Configuration Module 270 can either reside on a UEM server 212, 222, 232, or on a different server that controls the UEM server by steering parameters like patches, software, configurations.

Figure 2 shows three different implementation scenarios of the presented approach.

Company 1, 210, allows to implement the Endpoint Change Analysis Module 260 on the UEM server 212 itself (or gets the data directly from the server via an API).

Company 2, 220, does not get the Endpoint changes from the UEM Server 222 directly. The changes are analyzed on the endpoints 224 directly. Consequently, the Endpoint Change Analysis Modules 260 are installed on the endpoints. Company n, 230, uses an UEM that allows to not analyze all changes / not all endpoints directly on the UEM server. Therefore the "Endpoint Change Analysis Module" must be installed on the UEM server 232 and on those endpoints 234 that have relevant information, but their data cannot be acquired from the UEM-System 232 directly.

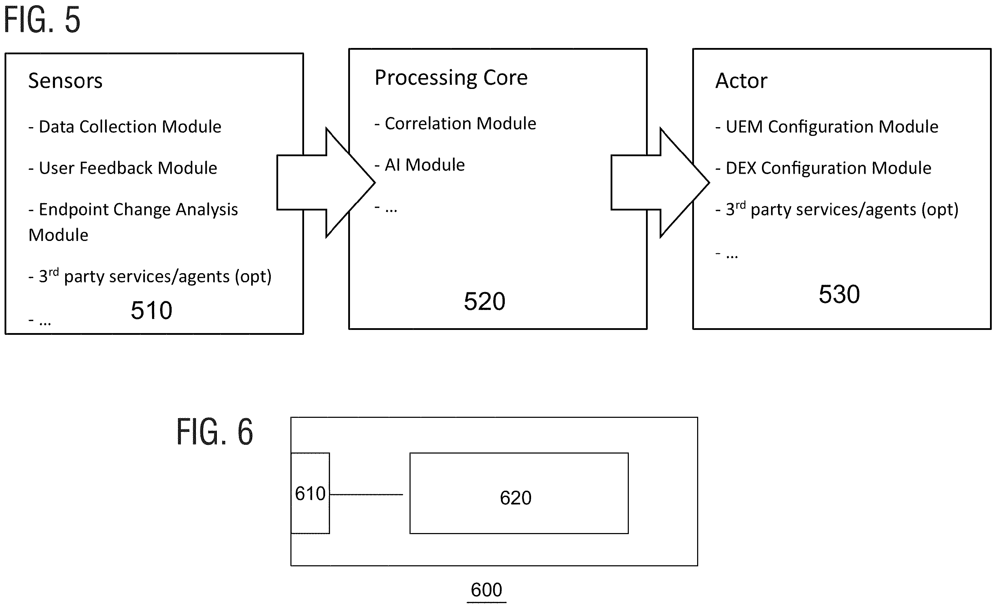

As again apparent from fig. 2 and from fig. 5 described subsequently, the difference of the embodiments described herein as compared to previously known solutions is the integration of various data sources, the correlation of this data, and the use of artificial intelligence to generate actionable insights. Previous solutions might have analyzed employee experience data, endpoint monitoring parameters or endpoint changes separately, but not in an aggregated way. This is an advancement over previous solutions, which often required manual analysis and may not have been able to effectively correlate endpoint changes with employee productivity and satisfaction.

Furthermore, the concept using AI allows to generate suggestions, recommendations, and possible automated actions for improvements. This invention, therefore, provides a more holistic and intelligent approach to enhancing the digital employee experience.

Fig. 3 is an illustration an implementation as to how to determine a recommendation for a change of a configuration of a computing node that is not based on a trained neural network. In the illustration in fig. 3, a computing node is represented by a path within a graph, a path comprising edges and vertices, the vertices within a level of the graph corresponding to an attribute of the computing node.

All attributes of a computing node are represented by a path traversing the graph. The edges illustrate different values of attributes of computing nodes while the vertices represent all endpoints that share the same attribute at this level. Additionally, every level has a vertex that represents "Null" - meaning that this attribute does not exist / is not detected for the computing nodes at this level. Every computing node can be represented as a set of attributes (e.g. {Windows 11 H2, Adobe Reader 16.3, Microsoft Word 24.2.18, Samsung SSD 980 Pro,...}) , we can consider this set of attributes as a path (walk in which no vertex appears more than once) though the graph.

If $v_l^n$ is the vertex of path $n$ at level I where $n, l \in \mathbb{N}_0$ , one can represent each computing node $cn^n$ as a tuple $cn^n = \left(v_0^n, v_1^n, v_2^n, ..., v_j^n\right)$ where $n \in \mathbb{N}_0$ represents an index number of the path.

$CN_{l,m}$ is the set of all computing nodes that share the same attribute m at level I.

For the following consideration, it is assumed that path 510 represents a set of attributes (vertices) of a detected outlier (path x), whereas the path 520 depicts a path with non-outliers. Specifically, the vertex $v_2^x$ (530) represents an attribute that differs from attributes of endpoints that are identified as non-outliers on the same level (Level 2). Thus, one can identify this vertex as the root cause for being an outlier and all computing nodes that are represented in $CN_{2,4}$ as outliers. The recommendation for "fixing" the issue results from identifying an optimal path that only consists of edges and vertices of non-outliers, where the number of vertices that differ from said path are minimal. In fig. 3, path 520 represents this recommendation.

In mathematical terms, this path can be identified as follows. If $V^n = \{v_l^n \mid l \epsilon \mathbb{N}_0\}$ is the set of vertices of a path $n, O = \{n \epsilon \mathbb{N}_0 | V^n \text{ represents an outlier}\}$ is the set of all indices for a path of an outlier and $NO = \{n \epsilon \mathbb{N}_0 | V^n \text{ represents an non-outlier}\}$

is the set of all indices for a path of non-outliers, the index of the optimal path for outlier $V^n$ where $n \in O$ is defined as $opt^n = \{m| \min_{m \in NO}(|V^n \backslash V^m|)\}$ which gives the index $m$ of a path of a non-outlier that has the least number of different vertices to the path of the outlier path $n$. Thus, the optimal path for $V^n$ where $n_E O$ is defined as $V^{opt^n}$ where $opt^n \in NO$.

The search for this optimal path that results in the recommendation provided by the method can, in general terms, be defined as generating the recommendation by determining an alternative configuration for the computing node that corresponds to another computing node with an expected behavior. The path corresponding to the alternative configuration has a minimum number of differences to the path representing the computing node determined to exhibit an unexpected behavior, i.e. being an outlier.

An alternative way to determine the recommendation is based on uses a statistical approach.

As defined above, $CN_{l,m}$ is the set of all computing nodes that share the same attribute m at level $l$ ( $m, l \in \mathbb{N}$ ).

For each of these endpoints we can identify the computing nodes that are outliers as $\underline{CN}^O_{l,m}$ and those that are non-outliers as $CN^{NO}_{l,m}$. $CN_{l,m} = CN^O_{l,m} \cup CN^{NO}_{l,m}$ .

We can define a weight of all vertices as $w^{NO}_{l,m} = \frac{|CN^{NO}_{l,m}|}{|CN_{l,m}|}$ as the relative amount on non-outliers, and $w^O_{l,m} = \frac{|CN^O_{l,m}|}{|CN_{l,m}|}$ as the relative amount on outliers.

For each individual computing node $cn^n = (v^n_0, v^n_1, v^n_2, ..., v^n_j)$ with $n \in O$ (i.e. $cn^n$ is an outlier), we can compute the level $l^n$ (element of the tuple) that has to be changed as $l^n = \min_l(w^O_{l,n})$ ,(level with minimal weight of all attributes of path n).

The corresponding attribute $v^n_{l^n}$ will be changed to $v^{\widehat{m}}_{l^n}$ , where $\widehat{m} = \max_m(w^{NO}_{l^n,m})$ (attribute with maximum number of non outliers on level $\breve{l}^n$ ).

In other words, generating the recommendation according to the alternative approach comprises identifying an attribute within the information on the configuration having a maximum probability of causing unexpected behavior and exchanging this attribute by an alternative attribute that is associated to the maximum number of computing nodes having the expected behavior.

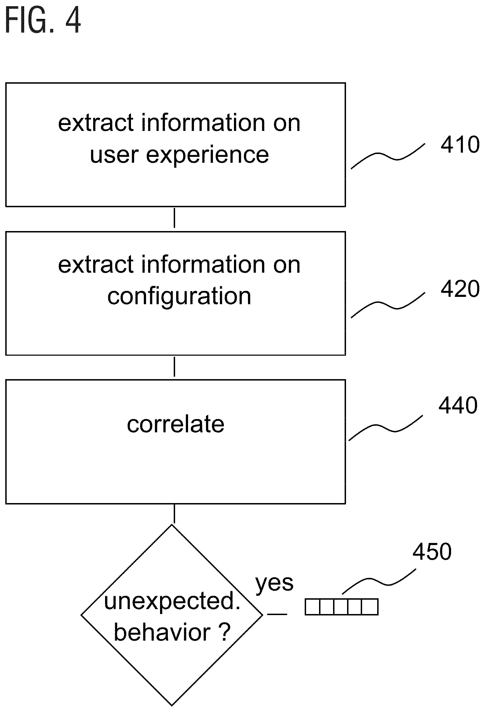

Fig. 4 is a flowchart of an embodiment of a method to monitor a computing node. The method is performed to partly implement the method of fig. 1 on the computing node itself. The method comprises extracting 410, from the computing node, information on a user experience and extracting 420 information on the configuration of the computing node. The method further comprises correlating 430 the information on the user experience and the information on the configuration to determine an unexpected behavior of the computing node.

If an unexpected behavior is determined, an output signal 450 is generated, the output signal comprising the information that an unexpected behavior is determined the information on the configuration of the computing node.

Since the embodiment of fig. 4 is based on the method illustrated in fig. 1, implementational details may be alike or similar. For examples of implementational details, the reader is, therefore, referred to the description of fig. 1.

Fig. 5 illustrates a conceptual view of the embodiments described herein. Sensors 510 of the type discussed herein source the data. A Processing Core 520, e.g. in the cloud or on a dedicated server, processes and stores the information and generates the recommendation. Actors 530 that show suggestions, recommendations to the admin/user and/or perform actions automatically.

For the sake of completeness, Fig. 6 is a schematic illustration of an apparatus 600 to manage a computing node. The apparatus is configured to perform the method illustrated in fig. 1. The apparatus comprises an input interface 610 configured to receive information on a user experience for the computing node and to receive information on the configuration of the computing node. Circuitry 620 is configured to correlate the information on the user experience and the information on the configuration to determine an unexpected behavior of the computing node. The circuitry 620 further generates an output signal causing an action to mitigate the unexpected behavior if the unexpected behavior is determined. The output signal may be processed within the apparatus 600 or sent to another processing entity via an optional output interface.

Security, integrity and protection of customer data can be guaranteed by the embodiments described herein. Customer data of customers using an embedment of a method to manage a computing node may be stored separately from the data used for the AI model training and recommendations. Data used for training of the correlation model may further be stored in an anonymous manner. Said training data can be anonymized before transmitted to the AI model or stored long-term in a data lake. The splitting of the data might be implemented in the processing core, at the endpoint computer or by another service in between the computing node and the cloud service performing the correlation.

In summary, the embodiments described herein may provide significant benefits.

By correlating digital employee experience data from various endpoints with changes made to these endpoints, the system provides a more comprehensive and holistic view of the digital workspace. This is a significant improvement over solutions that analyze these data sets separately.

The use of artificial intelligence to generate suggestions for endpoint changes is a major advancement. This allows for more intelligent and actionable insights compared to traditional, manual analysis methods.

The addition of our user feedback module to generate direct employee feedback allows for direct input from employees about their digital experience. This provides a more accurate and nuanced understanding of employee satisfaction and productivity, which is often missing in other solutions.

By continuously analyzing and correlating data, the system can proactively suggest improvements to the digital workspace. This can lead to increased productivity and satisfaction among employees, which can ultimately enhance overall business performance.

Implemented as a cloud-based platform, the described system can easily scale to accommodate growth and changes in the organization. It can also adapt to new technologies and trends in the digital workspace, ensuring its continued relevance and effectiveness.

With the huge amount of data collected from single, several or worldwide customers and the capabilities of AI technology to identify and track anomalies, plus the knowledge about the customers infrastructures and best practices how to react on certain behaviors/situations the system can provide a new and outstanding performance, enabling suggestions, recommendations, and automation.

Based on the system layout and the components involved, the system can also automatically track the effectiveness of applied suggestions, recommendations and automated actions. In result, it can learn from these results and improve further suggestions, recommendations, and automated actions. It also shows the admin/user the results of the improvements in a direct comparison

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

**Claims**

1. A method to manage a computing node, comprising:

   Receiving, for the computing node, information on a user experience;

Receiving, for the computing node, information on the configuration of the computing node;

Correlating the information on the user experience and the information on the configuration to determine an unexpected behavior of the computing node; and

If an unexpected behavior is determined, generating an output signal causing an action to mitigate the unexpected behavior.

2. The method according to claim 1, wherein the information on a user experience comprises user feedback given by a user of the computing node.

3. The method according to claim 1 or 2, wherein the information on a user experience comprises telemetry data of the computing node.

4. The method according to any of claims 1 to 3, wherein the information on the configuration of the computing node comprises information on the software configuration of the system.

5. The method according to claim 4, wherein the information on the software configuration of the system comprises at least one of an information on software installed on the system, on a version of installed software, and on a version of device firmware of components of the computing system.

6. The method according to any of claims 1 to 5, further comprising: including a recommendation for a change of the configuration of the computing node into the output signal.

7. The method according to claim 6, further comprising: changing a software configuration of the computing node based on the recommendation.

8. The method of any of the preceding claims, wherein correlating the information comprises using a neural network.

9. The method of claim 8, wherein the neural network comprises an autoencoder network.

10. The method of claim 8 or 9, further comprising: Training the neural network using the received information on the user experience and the received information on the configuration of the computing node.

11. The method of claim 6, further comprising: generating the recommendation, comprising determining an alternative configuration for the computing node, the alternative configuration corresponding to another computing node with an expected behavior; and using the alternative configuration as the recommendation.

12. The method according to claim 11, wherein the computing nodes are represented by paths within a graph, a path comprising edges and vertices, wherein the path corresponding to the alternative configuration has a minimum number of differences to the path representing the computing node.

13. The method according to claim 11, wherein generating the recommendation comprises:
Identifying an attribute within the information on the configuration having a maximum probability of causing unexpected behavior; and exchanging the attribute by an alternative attribute, the alternative attribute being associated to the maximum number of computing nodes having the expected behavior.

14. A method to monitor a computing node, comprising:

Extracting, from the computing node, information on a user experience;

Extracting, for the computing node, information on the configuration of the computing node;

Correlating the information on the user experience and the information on the configuration to determine an unexpected behavior of the computing node; and

If an unexpected behavior is determined, generating an output signal, the output signal comprising the information that an unexpected behavior is determined the information on the configuration of the computing node.

15. An apparatus for managing a computing node, comprising:

an input interface configured to receive information on a user experience for the computing node and to receive information on the configuration of the computing node; and circuitry configured to correlate the information on the user experience and the information on the configuration to determine an unexpected behavior of the computing node; and to generating an output signal causing an action to mitigate the unexpected behavior.

16. A computer program having program code for causing the execution of the method of any one of claims 1 to 14, it the program code is executed.

**Amended claims in accordance with Rule 137(2) EPC.**

1. A method to manage a computing node, comprising:

Receiving, for the computing node, information on a user experience;

Receiving, for the computing node, information on the configuration of the computing node;

Correlating the information on the user experience and the information on the configuration to determine an unexpected behavior of the computing node; and

If an unexpected behavior is determined, generating an output signal causing an action to mitigate the unexpected behavior and including a recommendation for a change of the configuration of the computing node, wherein generating the recommendation comprises;

determining an alternative configuration for the computing node, the alternative configuration corresponding to another computing node with an expected behavior; wherein the computing nodes are represented by paths within a graph, a path comprising edges and vertices, wherein the path corresponding to the alternative configuration has a minimum number of differences to the path representing the computing node.

2. The method according to claim 1, wherein the information on a user experience comprises user feedback given by a user of the computing node.

3. The method according to claim 1 or 2, wherein the information on a user experience comprises telemetry data of the computing node.

4. The method according to any of claims 1 to 3, wherein the information on the configuration of the computing node comprises information on the software configuration of the system.

5. The method according to claim 4, wherein the information on the software configuration of the system comprises at least one of an information on software installed on the system, on a version of installed software, and on a version of device firmware of components of the computing system.

6. The method according to any one of claims 1 to 5, further comprising: changing a software configuration of the computing node based on the recommendation.

7. The method of any of the preceding claims, wherein correlating the information comprises using a neural network.

8. The method of claim 7, wherein the neural network comprises an autoencoder network.

9. The method of claim 7 or 8, further comprising: Training the neural network using the received information on the user experience and the received information on the configuration of the computing node.

10. The method according to any one of claims 1 to 9, wherein generating the recommendation comprises: Identifying an attribute within the information on the configuration having a maximum probability of causing unexpected behavior; and exchanging the attribute by an alternative attribute, the alternative attribute being associated to the maximum number of computing nodes having the expected behavior.

11. A method to monitor a computing node, comprising:

Extracting (410), from the computing node, information on a user experience;

Extracting (420), for the computing node, information on the configuration of the computing node;

Correlating (430) the information on the user experience and the information on the configuration to determine an unexpected behavior of the computing node; and

If an unexpected behavior is determined, generating an output signal (450), the output signal comprising the information that an unexpected behavior is determined the information on the configuration of the computing node.

12. An apparatus (600) for managing a computing node, comprising:

an input interface )610) configured to receive information on a user experience for the computing node and to receive information on the configuration of the computing node; and circuitry (620) configured to correlate the information on the user experience and the information on the configuration to determine an unexpected behavior of the computing node; and to generating an output signal causing an action to mitigate the unexpected behavior and including a recommendation for a change of the configuration of the computing node, wherein generating the recommendation comprises:

determining an alternative configuration for the computing node, the alternative configuration corresponding to another computing node with an expected behavior; wherein the computing nodes are represented by paths within a graph, a path comprising edges and vertices, wherein the path corresponding to the alternative configuration has a minimum number of differences to the path representing the computing node.

**13.** A computer program having program code for causing the execution of the method of any one of claims 1 to 11, it the program code is executed.

FIG. 1

receive information on
user experience — 110

100

receive information on
configuration — 120

correlate — 140

150

unexpected. behavior ? yes

FIG. 2

290 — AI Module

280 — Correlation Module

data streams to cloud modules

224

234

Deployment of software/ patches/ configurations

212

Unified Endpoint Management

Company 1 (One central endpoint analysis Module)

210

Deployment of software/ patches/ configurations

222

Unified Endpoint Management

Company 2 (One Endpoint analysis Module per Endpoint)

260  220

Deployment of software/ patches/ configurations

232

Unified Endpoint Management

Company n (Hybrid Endpoint analysis Module)

270  230

240 ○ Data Collection Module   250 ● User Feedback Module   260 ◓ Endpoint Change Analysis Module   270 ◉ UEM Configuration Module

EP 4 703 891 A1

FIG. 3

# FIG. 4

```
┌─────────────────────────────┐
│     extract information on   │         410
│        user experience      │
└─────────────────────────────┘

┌─────────────────────────────┐
│     extract information on   │         420
│         configuration       │
└─────────────────────────────┘

┌─────────────────────────────┐
│          correlate          │         440
│                             │
└─────────────────────────────┘

                                          450
         ◇                    yes
     unexpected.                    □□□□
      behavior ?
         ◇
```

# FIG. 5

Sensors

- Data Collection Module

- User Feedback Module

- Endpoint Change Analysis Module

- 3rd party services/agents (opt)

- ...

510

Processing Core

- Correlation Module

- AI Module

- ...

520

Actor

- UEM Configuration Module

- DEX Configuration Module

- 3rd party services/agents (opt)

- ...

530

# FIG. 6

610

620

600

EP 4 703 891 A1

Europäisches
Patentamt

European
Patent Office

Office européen
des brevets

# EUROPEAN SEARCH REPORT

**Application Number**

EP 24 19 6982

## DOCUMENTS CONSIDERED TO BE RELEVANT

| Category | Citation of document with indication, where appropriate, of relevant passages | Relevant to claim |
|---|---|---|
| X | WO 2021/221635 A1 (HEWLETT PACKARD DEVELOPMENT CO [US]) 4 November 2021 (2021-11-04) | 1,2,4-7, 15,16 |
| Y | * the whole document * ----- | 3,11-13 |
| Y | WO 2023/196819 A1 (IVANTI INC [US]) 12 October 2023 (2023-10-12) * abstract * * page 2, line 11 - line 19 * * page 28, line 5 - line 20 * ----- | 3 |
| Y | US 2023/164029 A1 (MERMOUD GRÉGORY [CH] ET AL) 25 May 2023 (2023-05-25) * abstract * * paragraphs [0070] - [0099]; figures 5-7 * ----- | 11-13 |

**CLASSIFICATION OF THE APPLICATION (IPC)**

INV.
G06F11/30
G06F11/34
H04L41/16
G06F11/07

**TECHNICAL FIELDS SEARCHED (IPC)**

G06F
H04L

The present search report has been drawn up for all claims

| Place of search | Date of completion of the search | Examiner |
|---|---|---|
| Munich | 28 May 2025 | Salsa, Francesco |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

 

& : member of the same patent family, corresponding
document

EPO FORM 1503 03.82 (P04C01)

Europäisches
Patentamt

European
Patent Office

Office européen
des brevets

Application Number

EP 24 19 6982

## CLAIMS INCURRING FEES

The present European patent application comprised at the time of filing claims for which payment was due.

☐ Only part of the claims have been paid within the prescribed time limit. The present European search report has been drawn up for those claims for which no payment was due and for those claims for which claims fees have been paid, namely claim(s):

☐ No claims fees have been paid within the prescribed time limit. The present European search report has been drawn up for those claims for which no payment was due.

## LACK OF UNITY OF INVENTION

The Search Division considers that the present European patent application does not comply with the requirements of unity of invention and relates to several inventions or groups of inventions, namely:

see sheet B

☐ All further search fees have been paid within the fixed time limit. The present European search report has been drawn up for all claims.

☐ As all searchable claims could be searched without effort justifying an additional fee, the Search Division did not invite payment of any additional fee.

☒ Only part of the further search fees have been paid within the fixed time limit. The present European search report has been drawn up for those parts of the European patent application which relate to the inventions in respect of which search fees have been paid, namely claims:

1-7, 11-13, 15, 16

☐ None of the further search fees have been paid within the fixed time limit. The present European search report has been drawn up for those parts of the European patent application which relate to the invention first mentioned in the claims, namely claims:

☐ The present supplementary European search report has been drawn up for those parts of the European patent application which relate to the invention first mentioned in the claims (Rule 164 (1) EPC).

Europäisches
Patentamt

European
Patent Office

Office européen
des brevets

**LACK OF UNITY OF INVENTION
SHEET B**

The Search Division considers that the present European patent application does not comply with the requirements of unity of invention and relates to several inventions or groups of inventions, namely:

```
1. claims: 1-5, 15, 16(all partially)

     Group II
     The technical effect of the additional features of potential
     invention II is that information on the configuration of the
     computing node is gathered.
     The problem solved by these technical features can be
     regarded as: how to gather information on the configuration
     of the computing node.

1.1. claims: 1-3, 15, 16(all partially)

     Group I
     The technical effect of the additional features of potential
     invention I is that information on the user experience is
     gathered.
     The problem solved by these technical features can be
     regarded as: how to gather information on the user
     experience.
                         ---

2. claims: 11-13(completely); 1-7, 15, 16(partially)

     Group III
     The technical effect of the additional features of potential
     invention III is that an action to mitigate the unexpected
     behaviour is issued.
     The problem solved by these technical features can be
     regarded as: how to issue an action to mitigate the
     unexpected behaviour.
                         ---

3. claims: 8-10(completely); 1-7, 15, 16(partially)

     Group IV
     The technical effect of the additional features of potential
     invention IV is that information is correlated.
     The problem solved by these technical features can be
     regarded as: how to analyse the information.
                         ---

4. claims: 14(completely); 16(partially)

     Group V
     The technical effect of the additional features of potential
     invention V is that information on the unexpected behaviour
     is communicated.
     The problem solved by these technical features can be
     regarded as: how to monitor the computing node so to report
     anomalies.
                         ---
```

page 1 of 2

Europäisches
Patentamt

European
Patent Office

Office européen
des brevets

## LACK OF UNITY OF INVENTION
## SHEET B

**Application Number**

EP 24 19 6982

The Search Division considers that the present European patent application does not comply with the
requirements of unity of invention and relates to several inventions or groups of inventions, namely:

Please note that all inventions mentioned under item 1, although not
necessarily linked by a common inventive concept, could be searched
without effort justifying an additional fee.

page 2 of 2

## ANNEX TO THE EUROPEAN SEARCH REPORT
## ON EUROPEAN PATENT APPLICATION NO.

EP 24 19 6982

28-05-2025

| Patent document cited in search report | Publication date | Patent family member(s) | Publication date |
|---|---|---|---|
| WO 2021221635 A1 | 04-11-2021 | NONE | |
| WO 2023196819 A1 | 12-10-2023 | NONE | |
| US 2023164029 A1 | 25-05-2023 | NONE | |

EPO FORM P0459

For more details about this annex : see Official Journal of the European Patent Office, No. 12/82